Europäisches Patentamt

European Patent Office

Office européen des brevets

(19)

(11) Publication number: **0 268 493**
**A2**

## (12) EUROPEAN PATENT APPLICATION

(21) Application number: **87310248.7**

(22) Date of filing: **19.11.87**

(51) Int. Cl.⁴: **B 01 D 53/26**

(30) Priority: **20.11.86 US 932887**

(43) Date of publication of application:
**25.05.88 Bulletin 88/21**

(84) Designated Contracting States:
**AT BE CH DE ES FR GB GR IT LI LU NL SE**

(71) Applicant: **Peace, Terry**
**4230 Glendenning**
**Victoria British Columbia, V8X 2B5 (CA)**

(72) Inventor: **Peace, Terry**
**4230 Glendenning**
**Victoria British Columbia, V8X 2B5 (CA)**

(74) Representative: **Hitchcock, Esmond Antony et al**
**Lloyd Wise, Tregear & Co. Norman House 105-109 Strand**
**London WC2R 0AE (GB)**

(54) **Regenerable dehumidifier.**

(57) A dehumidifier device for absorbing water vapour from ambient air comprises a container (10) constructed of fabric woven from multifilament yarns of fibreglass, and confining granular desiccant material (11) such as silica gel having a visibly distinctive moisture indicator. The fabric is of a critically selected construction that permits visual observation of the confined granules through the fabric while effectively retaining the granules. The device is capable of repeated cycles of absorption of moisture and thermally induced desorption.

EP 0 268 493 A2

**Description**

## REGENERABLE HUMIDIFIER

This invention relates to a product for water vapour from ambient air, and more particularly concerns a device which confines granules of a substance capable of absorbing and desorbing water vapour.

A number of granular solid water-insoluble inorganic desiccant materials are generally available which can reversibly absorb water vapour from air or other gas mixtures while retaining their granular form. Such materials include calcium sulphate, zeolites (for example Linde molecular sieves 4A), alumina, magnesia, and silica gel. In their usual manner of use, the granular materials are disposed in columns through which a gas is passed, or disposed in thin layers in horizontally oriented trays which contact the gas to be treated. When the absorbent material becomes fully saturated with water, its absorbing capacity can be restored by heat treatment at temperatures in the range of 100 to 200°C which drives off the absorbed water. The degree of saturation of the granules can in some cases be monitored by the addition of trace amounts of visibly distinctive indicator substances. Such an indicator substance is a thermally stable, inorganic cobalt compound, the dry form generally has a blue colour and the wet form generally has a pink colour. The transition to the wet colour preferably occurs after saturation of the desiccant with water. A suitable compound is cobalt chloride which is commonly used for laboratory purposes as a desiccant indicator.

The use of silica gel granules confined within porous containers is well known for maintaining the dryness of sealed enclosures containing equipment or substances sensitive to moisture. Such porous containers are generally cellulosic paper pouches which, although capable of a limited amount of regeneration treatment, do not permit visual observation of the granules. The paper pouches, because of their limited strength and thermal resistance, are restricted to use in small sizes and in service conditions which do not require repeated regeneration or long term durability to rough handling.

According to the invention a dehumidifier is provided in which desiccant granules and a visibly distinctive indicator substance are confined in a container comprising a porous and at least partially transparent fabric woven from multifilament yarns of fibreglass. Preferred desiccant granules possess a large water-holding capacity and have sufficient cohesive strength to resist physical degradation with repeated thermal treatment. The fabric of the container should also be capable of withstanding repeated thermal regeneration of the granules.

Transparency in the fabric is a consequence primarily of the size and type of yarn used, and the nature of the weave itself. The fabric must have sufficient strength to retain the desiccant and indicating substance, but beyond being self-supporting, the device needs no additional strength to perform its intended function, and is preferably flexible to facilitate its location in a particular application. Sufficient transparency can be achieved using substantially opaque yarns with sufficient interstitial spacing to enable the indicating substance to be visible.

The container of devices according to the invention may be multi-compartmented and the fibreglass yarns are typically comprised of continuous filaments. The preferred container is of a generally rectangular configuration, preferably being of a multi-compartmented design and constructed by the joining of two facing panels of fibreglass fabric. The border extremities of the panels can be sealed by a thermally resistant closure mechanism, and are preferably sewn using fibreglass thread. Separate compartments can be bounded by lines of sewn interengagement of the facing panels of fabric. In some embodiments, two facing panels may be integral parts of the same piece of fabric which is folded so as to be doubled upon itself, the fold line constituting part of the border of the container.

A preferred desiccant material is silica gel having a surface area and pore volume chosen for high water absorption, while also having high crush strength. The visibly distinctive moisture indicating substance is typically a cobalt compound, preferably cobalt chloride.

The container or each compartment thereof in a device of the invention does not have to be filled to capacity, although a preferred minimum fill is 60%. I have also found that a container or compartment should not be filled above 85% capacity, and a fill within these limits is therefore recommended.

The invention will now be described by way of example and with reference to the accompanying drawing wherein:

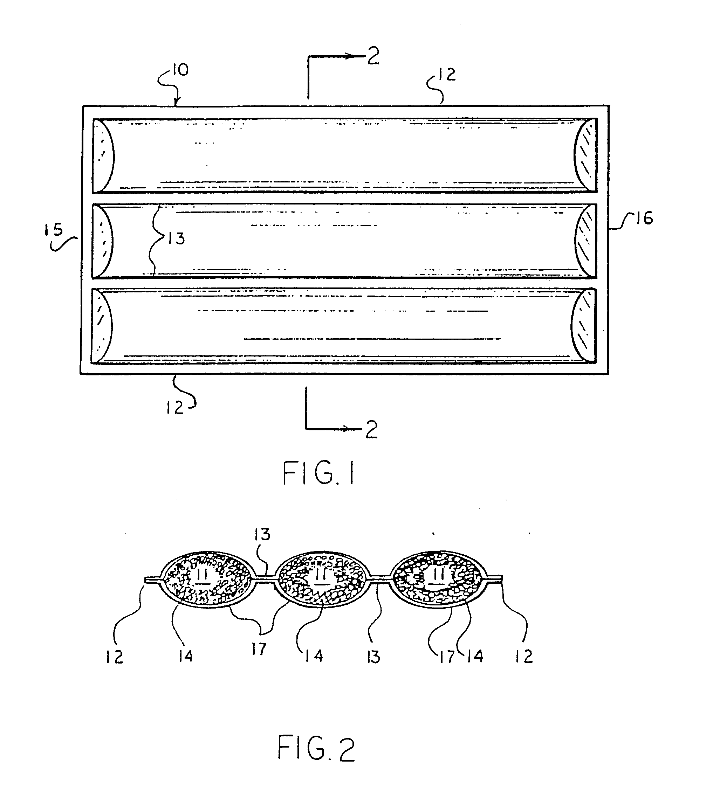

Figure 1 is a plan view of an embodiment of a dehumidifier device according to the invention;

Figure 2 is a sectional view taken along the line 2-2 of Figure 1.

The dehumidifier device shown in the drawing comprises a container 10 filled with silica gel granules 11.

The container is formed by sewing together two rectangular pieces of fibreglass woven fabric 17, thereby forming side closure borders 12, and end closure borders 15 and 16. Parallel seam lines 13 are also sewn through the two facing fabrics, extending between the end closure borders, and thereby defining elongate compartments 14. In an alternative embodiment, the container may be woven as an integral structure having three compartments. it is to be noted however, that in the production of the device, one end border edge is left unbound until the granules of silica gel have been emplaced within the compartments. In certain embodiments of the invention, the fabric may be a continuous knitted tube. When flattened, the knitted tube forms two side edges of the container, and the end borders are formed by cutting and sewing. Unravelling of cut edges of the fabric may be prevented by hemming with fibreglass yarn or by application of thermally resistant bonding agents such as silicones and fluoropolymers.

In a particular construction of container for use in devices of the invention, a plurality of compartments are formed, separated by margins of at least 0.65 cm (0.25 inch). A similar margin surrounds the compartments, except for the region or regions through which the compartments are to be filled. Typically, the margins are woven, but spaced lines of stitching can suffice.

Where separate compartments are defined in the container, different types of desiccant materials can be used in different compartments, as can different moisture indicating substances. It is not essential that a moisture indicating substance is confined in each compartment, it might be disposed in as few as one of them. It follows that only the compartment or compartments in which the moisture indicating substance is disposed require a transparent or translucent boundary, or need to be filled with a desiccant which does not inhibit the visibility of the substance. The use of different desiccants in the same device can be useful as generally, desiccants will perform differently as the ambient conditions vary. With a plurality of such different desiccants in the same device, a more consistent overall performance can be maintained over a wide range of ambient conditions, particularly over a wider temperature range.

The yarns utilised in the production of a suitable fabric for use in this invention are multifilament yarns of fibreglass in which each filament within the yarn strand or bundle has a diameter preferably within the range of 0.0025 to 0.0125 cm (0.0001 to 0.0005 inch). The yarn bundle has a minimal twist of between about 0.3 and 1.0 turns per inch and has a diameter of no more than 0.178 mm (0.007 inch). The fabric construction is preferably a square-type weave having 12 to 20 strands per cm (30 to 50 strands per inch) in each direction. However, twill and other weave patterns may be utilised at the same strand end count density. Suitable fabrics will typically have a weight of 33 to 270 grams per square metre (1 to 8 ounces per square yard). Fabrics of the aforesaid characteristics have been found to possess a translucent characteristic while having small interstices between the yarns. Also, such fabrics possess sufficient tightness of weave to prevent migration of strands during use with attendant change in size of interstices. Unpigmented continuous multifilament yarns are preferred.

A suitable type of silica gel useful in the practice of this invention is indicating Type IV, Grade H, MIL-D-3716-A made by Eagle Chemical Company of Alabama, U.S.A. The size of the silica gel granules is preferably 6 to 20 mesh size (U.S. Standard Sieve Series) which defines maximum cross-sectional dimensions in the range of 1.25 to 4.25 mm. As a general guide, the interstices of the fabric should not, with use, exceed 1.25 mm. In the exemplified three compartment device, it is preferable that the silica gel of at least the centre compartment be of the indicating type. It has been found that, if the extent of fill of the compartments is less than about 60%, the device is flaccid, permitting considerable mobility of the granules within their compartments. Such mobility promotes attritional degradation of the granules, producing dust-like particles which fall through the fabric.

The dehumidifier device of this invention finds special use within automobiles which must be parked overnight in cold, damp weather conditions which ordinarily produce condensation of water within the automobile. The dehumidifier prevents such condensation, and may be similarly employed in enclosed spaces of boats, aircraft, recreational vehicles, and commercial trucks and vans. When visual observation of the device indicates that the silica gel absorbent is saturated with water, the device may be placed in a conventional kitchen oven at a temperature in the range 100 to 200° C for several hours. The device is then removed from the oven and allowed to cool in a sealed or otherwise moisture free environment. Regeneration of the silica to its dry form may also be accomplished with caution in a microwave oven.

Dehumidifier devices of the present invention are safe and easy to manufacture. They use materials that are readily available and can be made in many forms to suit a wide variety of applications. Their use is simple and as noted above, they can be regenerated for repeated use in normal domestic appliances.

## Claims

1. A dehumidifier device in which desiccant granules and a visibly distinctive moisture indicating substance are confined in a container comprising a porous and at least partially transparent fabric woven from multifilament yarns of fibreglass.

2. A dehumidifier device according to Claim 1 wherein the container has sealed borders, the closure being thermally resistant.

3. A dehumidifier device according to Claim 2 wherein the borders are closed by fibreglass thread which sews together adjacent areas of the container fabric.

4. A dehumidifier device according to any preceding Claim wherein the yarns comprise continuous filaments.

5. A dehumidifier device according to any preceding Claim wherein the desiccant granules are silica gel.

6. A dehumidifier device according to any preceding Claim wherein the moisture indicating substance is a thermally resistant inorganic cobalt compound.

7. A dehumidifier device according to any preceding Claim wherein the container is only partially filled with said granules.

8. A dehumidifier device according to Claim 7 wherein the container is filled to 60 to 80% of its full capacity.

9. A dehumidifier device according to any preceding Claim wherein the container defines a plurality of elongate compartments arranged in substantially parallel alignment.

10. A dehumidifier device according to any preceding Claim wherein the container defines a plurality of compartments and wherein the visibly distinctive moisture indicating substance is included in fewer than all the compartments.

0268493

FIG.1

FIG.2